# EUROPÄISCHE PATENTSCHRIFT

(11) **EP 2 337 694 B1**
(45) Veröffentlichungstag und Bekanntmachung des Hinweises auf die Patenterteilung: **13.03.2013**
(21) Anmeldenummer: 09783270.3
(22) Anmeldetag: 22.09.2009
(51) Int. Cl.: B60C 23/04

(54) **VERFAHREN, SENSOR, DETEKTOR UND SYSTEM, ZUR LOKALISIERUNG ZUMINDEST EINES RADES AN EINEM FAHRZEUG**
METHOD, SENSOR, DETECTOR AND SYSTEM FOR LOCATING AT LEAST ONE WHEEL ON A VEHICLE
PROCÉDÉ, CAPTEUR, DÉTECTEUR ET SYSTÈME POUR LA LOCALISATION D'AU MOINS UNE ROUE SUR UN VÉHICULE

(30) Priorität: 26.09.2008 DE 102008049046
(43) Veröffentlichungstag der Anmeldung: 29.06.2011
(73) Patentinhaber: Continental Automotive GmbH, 30165 Hannover (DE)
(72) Erfinder: FINK, Alexander, 46306 Oakland Township Michigan (US)
(86) Internationale Anmeldenummer: PCT/EP2009/062245
(87) Internationale Veröffentlichungsnummer: WO 2010/034703

(56) Entgegenhaltungen:
- DE-A1- 19 849 390
- US-B2- 7 336 161

## Beschreibung

Die Erfindung betrifft ein Verfahren zur Lokalisierung zumindest eines Rades an einem Fahrzeug. Des weiteren betrifft die Erfindung einen Detektor zur Lokalisierung zumindest eines Rades an einem Fahrzeug. Schließlich betrifft die Erfindung ein System zur Lokalisierung zumindest eines Rades an einem Fahrzeug.

Aus der US 7,336,161 B2 ist ein-Verfahren gemä-ß dem-Oberbegriff des Anspruchs 1 bekannt.

Moderne Fahrzeuge verfügen häufig über Reifendruckkontrollsysteme beziehungsweise über Reifeninformationssysteme, bei denen im Reifen verbaute Sensoren Messwerte verschiedener Messgrößen (zum Beispiel Reifendruck, Reifentemperatur, Radlast, etc.) an eine Empfangseinheit senden. Den Sensoren ist dabei eine eindeutige Seriennummer zugeordnet, die bei einer Messwertübertragung mitgeschickt wird, sodass der Empfänger die Messwerte aufgrund dieser Seriennummer einem Reifen eindeutig zuordnen kann. Dies wird beispielsweise in der EP 626 911 B1 beschrieben.

Aus der Seriennummer alleine kann jedoch noch nicht auf eine bestimmte Verbauposition am Fahrzeug geschlossen werden, weswegen viele Fahrzeuge auch mit einem System zur Radlokalisierung ausgestattet sind. Aufgabe der Lokalisierung ist es, jeder Seriennummer eine Verbauposition zuzuweisen. Dies ermöglicht in Folge, Messwerte einer bestimmten Position am Fahrzeug zuzuordnen und den Fahrer bei Auftreten eines Reifen(druck)problems entsprechend zu informieren, etwa mit einem Warnhinweis "Druckabfall links, vorne". Darüber hinaus ermöglicht eine automatische Radlokalisierung die Überprüfung der korrekten Montage der Reifen/der Räder an einem Fahrzeug, sowie im Fehlerfall einen Warnhinweis an den Fahrer. Dabei wird sowohl die Montage an der richtigen Achse sowie an der richtigen Seite berücksichtigt. Beispiele für Umstände, die einen Warnhinweis auslösen können, sind Montage der häufig breiteren Hinterreifen an der Vorderachse sowie Montage in der falschen Drehrichtung.

Zur Radlokalisierung existieren eine Reihe von Ansätzen. Eine Möglichkeit zur Überprüfung der korrekten Montage der Reifen/der Räder besteht darin, die Drehrichtung eines Reifens/eines Rades auszuwerten und aus der Drehrichtung Rückschlüsse auf den Platz zu ziehen, an dem der Reifen/das Rad montiert ist.

Häufig werden für diese Aufgabe die bereits erwähnten, direkten Reifendrucksysteme, also Systeme bei denen ein Sensor direkt in dem sich drehenden Reifen verbaut ist, herangezogen. Diese Sensoren übermitteln ihre Daten in aller Regel per Funk an eine im Fahrzeug montierte Empfangseinheit. Durch Messung der Empfangsfeldstärke kann auf die Position des Rades geschlossen werden, vgl. DE 103 42 297 A1. Allerdings hängt diese auch von der Sendeleistung des Sensors ab, welche wiederum von der Stärke einer Batterie des Sensors abhängt. Auch kann der Montageort einer zentralen Empfangseinheit oft nicht beliebig gewählt werden, sodass teilweise nur mehrdeutige Signale zur Verfügung stehen. Alternativ dazu kann jedem Rad eine gesonderte Empfangseinheit zugeordnet werden, was jedoch technisch sehr aufwändig ist.

Die der vorliegenden Erfindung zugrunde liegende Aufgabe besteht nun darin, ein Verfahren, einen Detektor und ein System anzugeben, welche die Lokalisierung der Räder eines Fahrzeuges auf einfache Weise ermöglicht.

Erfindungsgemäß wird diese Aufgabe durch ein Verfahren mit den Merkmalen des Patentanspruchs 1 und/oder durch einen Detektor mit den Merkmalen des Patentanspruchs 6 und/oder durch ein System mit den Merkmalen des Patentanspruchs 10 gelöst.

Demgemäss ist vorgesehen, bei einem Verfahren zur Lokalisierung zumindest eines Rades an einem Fahrzeug folgende Schritte auszuführen:
a) Empfangen eines Signals eines an dem Rad montierten, ersten Sensors, welches Signal eine Stellung des Rades angibt;
b) Empfangen eines Messwertes, eines zweiten Sensors, der die Winkellage eines Rades misst, und einer bestimmten Stelle des Fahrzeuges zugeordnet ist;
c) Bestimmen der Phasenlage des ersten Signals in Relation zum Messwert;
d) Zuordnen des ersten Sensors zu dem zweiten Sensor, wenn die Phasenlage in einem bestimmten Beobachtungszeitraum innerhalb eines vorgegebenen Toleranzbereichs bleibt.

Demgemäss ist weiterhin ein Sensor vorgesehen, welcher zur Montage an einem Rad oder einem auf dem Rad montierten Reifen, zur Aussendung eines Signals, welches eine Stellung des Rades angibt, und zur Messung eines weiteren Parameter des Rades oder des Reifens vorgesehen ist.

Weiterhin ist zur Lösung der erfindungsgemäßen Aufgabe ein Detektor zur Lokalisierung zumindest eines Rades an einem Fahrzeug vorgesehen, umfassend:
a) Mittel zum Empfangen eines Signals eines an dem Rad montierten, ersten Sensors, welches Signal eine Stellung des Rades angibt;
b) Mittel zum Empfangen eines Messwertes eines zweiten Sensors, der die Winkellage eines Rades misst, und einer bestimmten Stelle des Fahrzeuges zugeordnet ist;
c) Mittel zum Bestimmen der Phasenlage des ersten Signals in Relation zum Messwert;
d) Mittel zum Zuordnen des ersten Sensors zu dem zweiten Sensor, wenn die Phasenlage in einem bestimmten Beobachtungszeitraum innerhalb eines vorgegebenen Toleranzbereichs bleibt.

Schließlich ist entsprechend der erfindungsgemäßen Aufgabe auch ein System zur Lokalisierung zumindest eines Rades an einem Fahrzeug vorgesehen, welches einen erfindungsgemäßen Detektor, erste Sensoren, welche zur Kommunikation mit dem Detektor vorgesehen sind, sowie zweite Sensoren, welche zur Kommunikation mit dem Detektor vorgesehen sind, umfasst.

An dieser Stelle wird darauf hingewiesen, dass die Erfindung auch auf die Lokalisierung von Reifen als solche bezogen ist, Anspruch 1 also auch im Sinne von "Verfahren zur Lokalisierung zumindest eines Reifens an einem Fahrzeug" zu lesen ist. Der Begriff "Rad" wäre dann auch im übrigen Teil der Anmeldung gedanklich durch "Reifen" zu ersetzen.

Der Vorteil der Erfindung liegt unter anderem darin, dass ein Rad mit vergleichsweise geringem technischen Aufwand lokalisiert werden kann. Eventuell vorhandene zweite Sensoren, wie sie etwa ohnehin für ABS-Systeme (Antiblockiersysteme) und ESP-Systeme (Elektronisches Stabilitätsprogramm) benötigt werden, können vorteilhaft für die Erfindung mitverwendet werden. Ein weiterer Vorteil der Erfindung ist auch dadurch gegeben, dass es vergleichsweise fehlertolerant ist, und auch noch bei sporadischen Ausfällen der Funkübertragungsstrecke funktioniert.

Vorteilhafte Ausgestaltungen und Weiterbildungen der Erfindung ergeben sich aus den Unteransprüchen sowie aus der Beschreibung in Zusammenschau mit den Figuren der Zeichnung.

Vorteilhaft ist es, wenn der erste Sensor das Signal in einer vorgebbaren Stellung des Rades aussendet. In diesem Fall muss kein Messwert einer Winkelstellung eines Rades vom Sensor zum Detektor übertragen werden sondern es genügt im Prinzip ein impulsförmiges Signal bei Erreichen einer vorgegebenen Stellung des Rades. Einerseits ist das Signal weniger komplex, andererseits können sich auch Vorteile bei der Abarbeitung der Verfahrensschritte ergeben wenn von einem fixen Winkel des Rades ausgegangen werden kann. Selbstverständlich können bei Erreichen der vorgegebenen Stellung auch andere Daten übertragen werden, etwa ein im Reifen herrschender Druck.

Günstig ist es dabei, wenn als vorgebbare Stellung des Rades eine oder mehrere aus der Gruppe: Winkelstellung des Rades bezogen auf den Raum, Eintritt eines Punktes am Radumfang in die Radaufstandfläche, Austritt eines Punktes am Radumfang aus der Radaufstandfläche, Erreichen eines Punktes am Radumfang der Mitte der Radaufstandfläche vorgesehen ist. Diese Stellungen sind einfach zu ermitteln und eignen sich daher gut für die Anwendung im Rahmen der Erfindung. Dabei ist zu beachten, dass die Winkelstellung bei Eintritt und Austritt aus der Radaufstandsfläche mit Radlast, Reifendruck, etc. variiert. Für die Detektion der angesprochenen vorgebbaren Radstellungen eignen sich insbesondere Beschleunigungssensoren, die eine Beschleunigung quer zur Rotationsachse des Rades messen können, sowie Piezosensoren, welche den Eintritt in die oder Austritt aus der Radaufstandsfläche, sowie das Durchwandern derselben detektieren können.

Besonders vorteilhaft ist es, wenn der Beobachtungszeitraum derart gewählt wird, dass die Umdrehungen zumindest zweier Räder eine vorgebbare Differenz aufweisen. Um die Räder eindeutig einer bestimmten Position am Fahrzeug zuordnen zu können, ist ein Drehzahlunterschied der Räder vorteilhaft. Der Beobachtungszeitraum kann nun dadurch bestimmt werden, dass mit der Ausführung des vierten Schrittes d) so lange gewartet wird, bis sich eine solche Differenz einstellt. Der Beobachtungszeitraum ist hier also nicht fix vorgegeben, sondern ergibt sich dynamisch durch Eintreten der angegebenen Bedingung.

Besonders vorteilhaft ist es weiterhin, wenn zur Bestimmung des Beobachtungszeitraums das Eintreten einer bestimmten Betriebssituation des Fahrzeuges abgewartet wird. Neben der Auswertung der Differenz der Radumdrehungen kann auch eine Betriebssituation abgewartet werden, bei deren Auftreten das erfindungsgemäße Verfahren gestartet und/oder beendet wird. Beispielsweise kann der Beginn und das Ende einer Kurvenfahrt mit einem Querbeschleunigungsmesser festgestellt werden. Bei Beginn der Kurvenfahrt kann dann das erfindungsgemäße Verfahren gestartet und die Schritte a) bis c) wiederholt durchlaufen werden, so lange bis das Ende der Kurvenfahrt festgestellt und die Ausführung des Schrittes d) initiiert wird. Neben Kurvenfahrten ist natürlich auch die Auswertung anderer Betriebssituationen möglich, in denen sich üblicherweise eine Drehzahldifferenz der Räder einstellt. Beispiele sind starke Beschleunigungs- und Bremsmanöver, bei denen es häufig zu durchdrehenden Rädern kommt. Es können also völlig "normale" Betriebssituationen eines Fahrzeuges zur Lokalisierung der Räder herangezogen werden, wodurch der Ablauf des erfindungsgemäßen Verfahrens im Hintergrund und vom Fahrer völlig unbemerkt ablaufen kann. Eine eigens dafür vorgesehene Messprozedur, welche von den Fahrzeughaltern gestartet und daher vermutlich als lästig empfunden werden würde, muss daher nicht durchlaufen werden.

Günstig ist es weiterhin, wenn der erste Sensor als weiteren Parameter einen oder mehrere aus der Gruppe: Reifentemperatur, Reifendruck oder Radlast misst. Sensoren für die angegebenen Parameter finden sich in modernen Fahrzeugen oft ohnehin, sodass diese nur um die erfindungsgemäße Funktion erweitert werden müssen. Hier ergeben sich Vorteile bei der Montage des Sensors am Reifen oder am Rad, da nur ein Sensor für mehrere Funktionen montiert werden muss.

Bei einem erfindungsgemäßen Meßsystem ist es schließlich günstig, wenn die Mittel zum Bestimmen in welcher Winkellage das Signal des ersten Sensors empfangen wird, sowie die Mittel zum Zuordnen des ersten Sensors zu dem zweiten Sensor in einem Halbleiterbaustein angeordnet sind und die Empfangsmittel zumindest einen Eingang und/oder eine Funkempfangsmodul desselben darstellen. Halbleiterbausteine sind klein, ausfallsicher und leicht verfügbar. Deshalb ist es günstig, die erfindungsgemäßen Funktionen in einem solchen Halbleiterbaustein, etwa einem Mikroprozessor mit Speicher, ablaufen zu lassen. Aber auch eine Integration des erfindungsgemäßen Verfahrens, beziehungsweise der dazu nötigen Mittel, in eine ohnehin vorhandene Bordelektronik ist möglich.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: zeigt ein Fahrzeug mit erfindungsgemäßem System in Draufsicht und Seitenansicht
- Fig. 2: zeigt die wichtigsten Komponenten eines Detektors
- Fig. 3: ein Rad in Detailansicht
- Fig. 4: zeigt die zeitlichen Abläufe der Signale der ersten und zweiten Sensoren

In den Figuren der Zeichnung sind gleiche und funktionsgleiche Elemente und Merkmale - sofern nichts Anderes ausgeführt ist - mit denselben Bezugszeichen versehen.

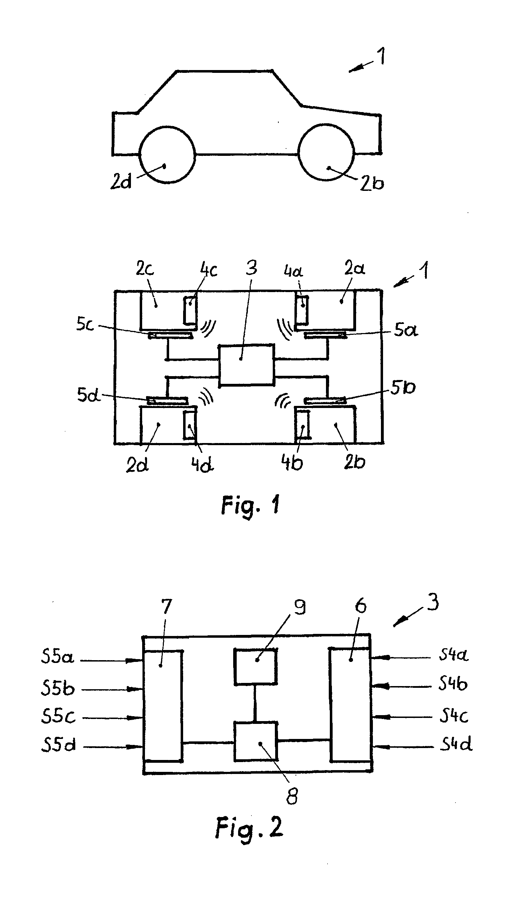

Figur 1 zeigt ein Fahrzeug 1 in Seitenansicht und Draufsicht. Das Fahrzeug 1 umfasst 4 Räder 2a..2d mit jeweils zugeordneten ersten Sensoren 4a..4d, ein Meßsystem 3 zur Lokalisierung zumindest eines Rades 2a..2d an dem Fahrzeug 1 und 4 zweite Sensoren 5a..5d, welche einer bestimmten Position an einem Fahrzeug 1 zugeordnet sind. Im gezeigten Beispiel ist der zweite Sensor 5a links vorne, der zweite Sensor 5b rechts vorne, der zweite Sensor 5c links hinten und der zweite Sensor 5d rechts hinten angeordnet.

Figur 2 zeigt eine detaillierte Skizze eines Meßsystems 3. Dieses umfasst einen Empfänger 6 zur Erfassung der über Funk übermittelten Signale S4a..S4d der ersten Sensoren 4a..4d und ein Eingangsmodul 7 zum Erfassen der Signale S5a..S5d der zweiten Sensoren 5a..5d. Darüber hinaus umfasst das Meßsystem 3 einen Mikrocontroller 8 und einen Speicher 9. Der Speicher 9 kann unter anderem dazu vorgesehen sein, die für das erfindungsgemäße Verfahren nötigen Daten sowie Abläufe zu speichern. In aller Regel wird das Verfahren in Form eines Programms im Speicher 9 abgelegt sein. Der Mikrocontroller 8 liest diesen aus und arbeitet das Verfahren Schritt für Schritt ab. Das Meßsystem 3 kann auch Teil eines Bordcomputers (nicht dargestellt) sein, welcher auch andere Steueraufgaben des Fahrzeuges 1 ausführt. Gegebenenfalls sind die Teile des Überwachungsgerätes dann nicht als physikalische sondern als funktionale Blöcke zu sehen. Der Einfachheit wird aber im folgenden angenommen, es handle sich beim Meßsystem 3 um ein gesondertes Gerät.

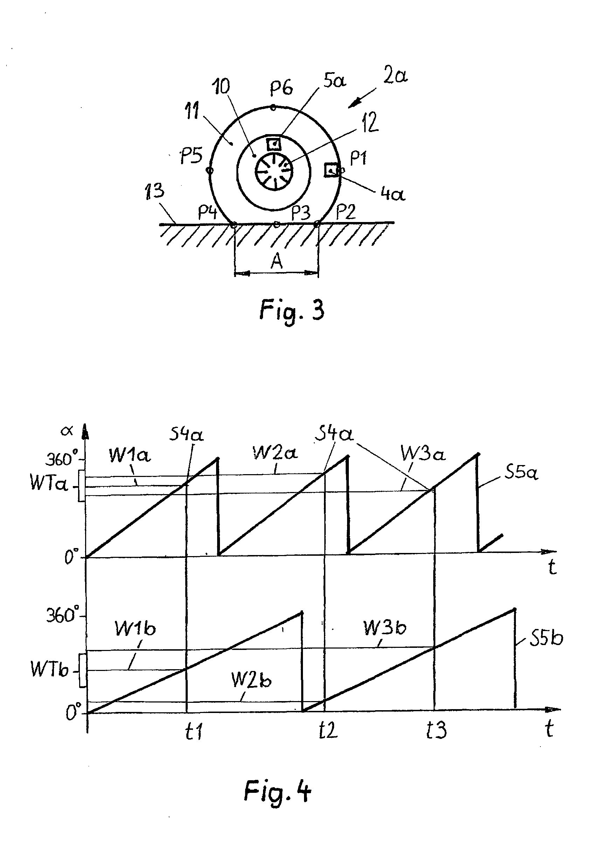

Figur 3 zeigt das Rad 2a in Detaildarstellung. Das Rad 2a, welches auf einer Fahrbahn 13 steht, umfasst eine Felge 10 einen darauf montierten Reifen 11 und eine darauf montierte Strichscheibe 12. Durch die Radlast verformt sich der Reifen 11 im Bereich der Radaufstandfläche A (auch unter dem Begriff "Latsch" bekannt) und nimmt dort die Form der Fahrbahn an, welche im gezeigten Beispiel eben ist.

Der erste Sensor 4a ist dazu vorgesehen in einer bestimmten Stellung des Rades 2a ein Signal S4a auszusenden. Dies kann eine Winkelstellung des Rades bezogen auf den Raum, beispielsweise 3 Uhr P1, 9 Uhr P5 oder 12 Uhr P6 sein. Solche Stellungen können etwa mit einem fix am Rad 2a angebrachten Beschleunigungssensor in an sich bekannter Weise vergleichsweise einfach ermittelt werden, da die auf den Sensor wirkende Erdbeschleunigung immer zur Erdmitte weist. Wenn - was nicht unbedingt erforderlich ist - die Stellung des Rades 2a exakt ermittelt werden soll, sind überlagerte Beschleunigungen wie zum Beispiel die Zentrifugalbeschleunigung, Beschleunigungen des Fahrzeuges sowie Fahrten auf einer schiefen Ebene zu berücksichtigen. Neben der Auswertung der Richtung der Erdbeschleunigung kann natürlich auch die Richtung der Längsbeschleunigungen beim Beschleunigen und Abbremsen des Fahrzeugs 1 ausgewertet werden. Das Eintreten einer solchen Betriebssituation kann entweder durch Differenzieren der Raddrehzahl oder mit im Fahrzeug 1 verbauten Beschleunigungssensoren detektiert werden. So kann zum Beispiel wieder die 3-Uhr-Stellung P1, die 9-Uhr-Stellung P5 und die 12-Uhr-Stellung P6 erkannt werden.

An sich ist die 6 Uhr Stellung P3 ebenfalls eine Stellung im Raum, kann aber mit einem Beschleunigungssensor nur schwer ermittelt werden, da auf diesen während des gesamten Durchwanderns der Radaufstandsfläche A und nicht nur in einem singulären Punkt nur die Erdbeschleunigung wirkt. Die Stellung P3 wird daher gemeinsam mit den Stellungen P2 und P4 mitbehandelt. Als Stellung des Rades 2a kann nämlich auch der Eintritt eines Punktes am Radumfang in die Radaufstandfläche A (P2), Austritt eines Punktes am Radumfang aus der Radaufstandfläche A (P4), Erreichen eines Punktes am Radumfang der Mitte der Radaufstandfläche A (P3) vorgesehen sein. Für diesen Anwendungsfall kann beispielsweise ein Piezosensor eingesetzt werden, welcher im Bereich der Radaufstandsfläche A nicht gekrümmt, außerhalb der Radaufstandsfläche A leicht gekrümmt und in einem Übergangsbereich stark gekrümmt ist. Aus diesem Verformungsmuster kann auf die Stellung des Rads 2a geschlossen werden. Da die Radaufstandsfläche A unter anderem von der Radlast und dem Reifendruck abhängt sind die Positionen P2 und P4 nicht mit einer (konstanten) Stellung des Rads 2a im Raum identisch.

Vorteilhaft kann die von einem Piezokristall in elektrische Energie umgewandelte Verformungsenergie auch zur Energieversorgung des ersten Sensors 2a herangezogen werden. Gegebenfalls kann auf eine Batterie dann völlig verzichtet werden. Es ist aber auch möglich eine vorhandene Batterie zu stützen beziehungsweise einen Kondensator zu laden, der die Energieversorgung über einen gewissen Zeitraum sicherstellt. Wegen der wechselnden Polarität der von den Piezos erzeugten Spannung ist zusätzlich ein Gleichrichter vorzusehen.

Im gezeigten Beispiel sendet der Sensor 4a..4d das Signal S4a..S4d an einer vorgebbaren Stellung P1..P6 des Rades 2a..2d. Selbstverständlich funktioniert der gezeigte Ablauf aber auch dann, wenn der Detektor 3 zu einem bestimmten Zeitpunkt die Stellung P1..P6 eines Rades 2a..2d abfrägt.

Der zweite Sensor 5a ist dazu vorgesehen, eine Winkelstellung des Rads 2a zu messen. Dies erfolgt im gezeigten Beispiel in an sich bekannter Weise mit einer Reflex- oder Gabellichtschranke sowie einer Strichscheibe 12. Die Hell-/Dunkelunterschiede werden vom zweiten Sensor 5a erkannt und mit Hilfe einer nachgeschalteten Elektronik in eine Winkelstellung umgerechnet. An sich können aber auch direkt die Zählimpulse der Lichtschranke als Winkeläquivalent weiterverarbeitet werden. Bei hoher Anzahl der auf der Strichscheibe 12 aufgebrachten Hell-/Dunkelwechsel ist eine hohe Winkelauflösung möglich, bei geringer Anzahl nur eine geringe Winkelauflösung. Im Fahrzeugbau werden häufig auch Zahn- oder Lochscheiben eingesetzt, wobei wegen der Schmutzanfälligkeit anstelle eines optischen Sensors auch ein Hallsensor eingesetzt werden kann, sofern die Zahn- oder Lochscheibe aus Metall besteht. Prinzipiell sind natürlich auch kapazitive und induktive Aufnehmer für die Messung der Winkelstellung des Rads 2a denkbar.

Die Winkelstellungen der Räder 2a..2d können mit wenig Aufwand durch Auswertung der Raddrehzahlsignale, wie sie zum Beispiel ohnehin für ABS-Systeme (Antiblockiersysteme) und ESP-Systeme (Elektronisches Stabilitätsprogramm) benötigt werden, bestimmt werden. Hierbei wird zu einem bestimmten Zeitpunkt, etwa beim Einschalten der Zündung, ein Segment (oder auch Zahn) im Raddrehzahlsensor als Nullpunkt definiert. Bezogen auf diese Position können dann die folgenden Winkel basierend auf einer Zählung der durchlaufenen Segmente (beziehungsweise Zähne) berechnet werden.

Schließlich ist es auch denkbar, dass der zweite Sensor 5a baugleich mit dem ersten Sensor 4a ist. Ein Beispiel wäre ein, zum Beispiel an der Antriebsachse angebrachter, Beschleunigungssensor. Der Unterschied zwischen erstem und zweiten Sensor 4a und 5a besteht dann insbesondere darin, dass der zweite Sensor 5a einer Stelle an dem Fahrzeug 1 zugeordnet ist. Der zweite Sensor 5a ist in diesem Beispiel dem Radkasten links vorne zugeordnet.

Figur 4 zeigt schließlich ein Zeitdiagramm des ersten Sensors 4a links vorne und zweier zweiter Sensoren 5a (links vorne) und 5b (rechts vorne), wobei das Signal S5a oben und das Signal S5b unten dargestellt ist.

Das Signal S5a zeigt einen sägezahnförmigen Verlauf, wobei ein Zahn einer vollen Umdrehung, also einem Winkel von 0° bis 360°, des Rades 2a entspricht. Das Signal S5b zeigt ebenfalls einen sägezahnförmigen Verlauf, allerdings mit geringerer Frequenz, was bedeutet, das sich das beim zweiten Sensor 5b angebrachte Rad 2b langsamer als das Rad 2a bewegt. Das Fahrzeug 1 befindet sich also in einer Rechtskurve.

Die Funktion des erfindungsgemäßen Verfahrens, beziehungsweise des Meßsystems 3, wird nun anhand der Figuren 1 bis 4 näher erläutert. Auf Anforderung oder zu wiederkehrenden Zeitpunkten beginnt das Meßsystem 3 mit der Durchführung des erfindungsgemäßen Verfahrens:

In einem ersten Schritt a) wird das Signal S4a des an dem Rad 2a montierten, ersten Sensors 4a empfangen. Im gezeigten Beispiel wird angenommen, dies erfolge in der 9-Uhr-Stellung P5. Die Übermittlung des Signals erfolgt dabei über Funk, andere Übertragungsmöglichkeiten sind aber prinzipiell ebenfalls möglich.

In einem zweiten Schritt b) werden die Signale S5a und S5b der zweiten Sensoren 5a und 5b empfangen. Diese entsprechen dem in Figur 4 gezeigten Verlauf, es können aber auch treppenförmige Verläufe vorgesehen werden, wenn die Auflösung der zweiten Sensoren 5a und 5b geringer ist.

An dieser Stelle sei darauf hingewiesen, dass insbesondere die Schritte a) und b) nicht in der angegebenen Reihenfolge beziehungsweise überhaupt parallel abgearbeitet werden können. Des weiteren können die Signale aller ersten Sensoren 4a..4d und aller zweiten Sensoren 5a..5d in einem Zyklus erfasst werden. Im gezeigten Beispiel wird aber der besseren Übersicht halber weiterhin davon ausgegangen, dass nur die Signale eines ersten Sensors 4a und zweier zweiter Sensoren 5a und 5b ausgewertet werden.

In einem dritten Schritt c) wird nun bestimmt, in welcher Phasenlage W1a..W3a das Signal S4a des ersten Sensors S4a empfangen wird. Zu einem Zeitpunkt t1 wird das Signal S4a in einer Phasenlage W1a, zu einem Zeitpunkt t2 in einer Phasenlage W2a und zu einem Zeitpunkt t3 in einer Phasenlage W3a empfangen. Die Phasenlagen W1a..W3a bleiben nicht konstant, sondern sind einer gewissen Variation unterworfen. Dies ist etwa durch Messtoleranzen der Sensoren sowie sogenanntem "Jitter", also zeitlichen Schwankungen der Messung beziehungsweise Messwertübertragung bedingt.

Ein weiterer Grund für einen Winkelversatz bei ansonsten konstanten Zeiten für Messung und Messwertübertragung ist auch die Drehzahl eines Rades. Je nach Drehzahl verursacht eine konstante Verarbeitungszeit unterschiedlichen Winkelversatz, was die Lokalisierung eines Rades 2a..2d erschweren oder sogar unmöglich machen kann. Vorteilhaft ist im Meßsystem 3 der gesamte Zeitverzug vom Erreichen einer Radstellung P1..P6 bis zum Empfang des Signals S4a..S4d beim Detektor 3 bekannt, sodass der genannte Einfluss berücksichtigt werden kann. Dies kann man zum Beispiel durch Vorsehen eines konstanten Zeitintervalls vom Erreichen einer Radstellung P1..P6 bis zum Empfang des Signals S4a..S4d erreichen. Hierbei wird, etwa von einer Elektronik des Sensors 4a..4d, eine von der Raddrehzahl abhängige Verzögerungszeit zwischen Erreichen einer Radstellung P1..P6 bis zum Senden des Signals S4a..S4d abgewartet, sodass der Winkelversatz konstant bleibt. Aber auch die Verwendung von Zeitstempeln ist bei einheitlicher Systemzeit möglich. Dabei wird die Radstellung P1..P6 zusätzlich mit einem Zeitstempel versehen, der vom Detektor 3 ausgewertet werden kann.

Ein wesentlicher und vor allem unbestimmter Zeitverzug kann auch während der Kommunikation zwischen Detektor 3 und den Sensoren 4a..4d oder 5a..5d mittels eines Kommunikationsbusses (z.B. CAN Bus) entstehen, in welchem Bus bestimmte oder konstante Übertragungszeiten nicht gewährleistet werden können. Vorteilhaft werden auch hier die Messwerte mit Zeitstempeln versehen, um den tatsächlichen Zeitverzug im Detektor 3 berücksichtigen zu können.

Aus den erwähnten Gründen wird ein Toleranzbereich WTa vorgesehen. Im gezeigten Beispiel wird der Toleranzbereich WTa so eingestellt, dass die erste ermittelte Phasenlage W1a in der Mitte des Toleranzbereichs WTa liegt. Dies ist nur ein exemplarisches Beispiel, andere Festlegungen des Toleranzbereiches sind gleichermaßen möglich. Analog dazu werden die Phasenlagen W1b..W3b ermittelt und ein Toleranzbereich WTb festgelegt.

In einem vierten Schritt d) wird nun der erste Sensor 4a dem zweiten Sensor 5a zugeordnet, wenn die Phasenlage W1a..W3a in einem bestimmten Zeitraum innerhalb eines vorgegebenen Toleranzbereichs WTa bleibt.

Zum besseren Verständnis dieses Schrittes wird noch einmal klargemacht, dass der erste Sensor 4a a priori keiner bestimmten Stelle des Fahrzeuges 1 zugeordnet werden kann. Der erste Sensor 4a ist nämlich einem Rad 2a oder einem Reifen 11 zugeordnet. Das Rad 2a oder der Reifen 11 kann aber an beliebiger Stelle des Fahrzeuges 1 montiert werden, etwa beim Wechsel von Sommerreifen auf Winterreifen. Dies führt dann zu Problemen, wenn der Sensor 4a auch zur Reifendrucküberwachung vorgesehen ist und ein Warnsignal nicht einer bestimmten Stelle des Fahrzeuges 1, also etwa "links vorne", zugeordnet werden kann.

Aus der Figur 4 wird rasch klar, dass das die Phasenlage W1a..W3a des Signals S4a über den gesamten in der Figur 4 dargestellten Zeitraums innerhalb des Toleranzbereiches WTa für das Signal S5a bleibt, wohingegen der Toleranzbereich WTb für das zweite Signal S5b schon bei der zweiten Erfassung verlassen wird. Es ist somit klar, dass das Rad 2a mit dem ersten Sensor 4a unmöglich an der Stelle des Fahrzeuges 1 montiert sein kann, welcher der zweite Sensor 5b zugeordnet ist, denn ansonsten müssten die Phasenlage des Signals S4a mit dem Signal S5b korrelieren. Im gezeigten Beispiel kann der erste Sensor 4a rasch dem zweiten Sensor 5a und somit das Rad 2a einer bestimmten Stelle des Fahrzeuges 1, nämlich links vorne, zugeordnet werden.

Das erfindungsgemäße Verfahren kann prinzipiell für jeden ersten Sensor 4a..4d einzeln ablaufen oder es können alle ersten Sensoren 4a..4d auf einmal zugeordnet werden.

Der Beobachtungszeitraum wird generell so gewählt, dass sich die Signale S4a..S4d eindeutig einem bestimmten zweiten Sensor 5a..5d zuordnen lassen. Anstelle einer direkten Zeitangabe kann auch das Kriterium herangezogen werden dass die Umdrehungen oder auch Drehzahlen zumindest zweier Räder 2a..2d eine vorgebbare Differenz aufweisen. In der Praxis kommt dafür etwa eine Kurvenfahrt in Betracht, in der jedes Rad 2a..2d einer eigenen Kreisbahn folgt und damit unterschiedliche Umdrehungen für jedes Rad 2a..2d vorliegen. Aber auch durchdrehende und blockierende Räder 2a..2d können eine solche Differenz hervorrufen. Mit anderen Worten bedeutet dies, dass das Eintreten einer bestimmten Betriebssituation abgewartet wird bis die Räder 2a..2d den Positionen am Fahrzeug 1 zugewiesen werden.

Bei der Erstausstattung des Fahrzeuges mit Reifen oder einem Neukauf von Reifen, beziehungsweise bei den für Personenkraftwagen üblichen halbjährlichen Wechselzyklen für Sommer - und Winterbereifung ist eine Wartezeit bis zum Eintreten einer solchen Betriebssituation aber durchaus akzeptabel. Das Eintreten einer vorgegebenen Betriebssituation ist dann der Auslöser oder "Trigger" für die positive Ausführung des vierten Verfahrensschritts d).

Denkbar ist natürlich auch, das Lokalisierungsverfahren nach einer längeren Parkdauer des Wagens starten, das heißt nach einer Zeit, die prinzipiell ausreicht, um zumindest einen Reifen des Fahrzeuges wechseln zu können. Wenn das Verfahren nach jeder längeren Parkdauer gestartet wird, kann sichergestellt werden, dass ein Tausch der Reifen auf jeden Fall detektiert und dessen Position ermittelt wird. Das Eintreten eines solchen Kriteriums wäre dann der Auslöser für den Start des Verfahrens beim Schritt a). Denkbar - wenn auch nicht so ökonomisch - ist es jedoch auch, dass die Schritte a) bis c) laufend ausgeführt werden und das Auftreten einer längeren Parkdauer der Auslöser für den Schritt d) des Verfahrens ist.

## Patentansprüche

1. Verfahren zur Lokalisierung zumindest eines Rades (2a..2d) an einem Fahrzeug (1), umfassend die Schritte:
a) Empfangen eines Signals (S4a..S4d) eines an dem Rad (2a..2d) montierten, ersten Sensors (S4a..S4d), welches Signal (S4a..S4d) eine Stellung (P1..P6) des Rades (2a..2d) angibt; und
b) Empfangen eines Messwertes (S5a..S5d), eines zweiten Sensors (5a..5d), der die Winkellage eines Rades (2a..2d) misst, und einer bestimmten Stelle des Fahrzeuges (1) zugeordnet ist;
**gekennzeichnet durch** die Schritte
c) Bestimmen der Phasenlage (W1a..W3a W1b..W3b) des ersten Signals (S4a..S4d) in Relation zum Messwert (S5a..S5d); und
d) Zuordnen des ersten Sensors (4a..4d) zu dem zweiten Sensor (5a..5d), wenn die Phasenlage (W1a..W3 W1b..W3b) in einem bestimmten Beobachtungszeitraum innerhalb eines vorgegebenen Toleranzbereichs (WTa, WTb) bleibt.

2. Verfahren nach Anspruch 1,
**dadurch gekennzeichnet,**
**dass** der erste Sensor (S4a..S4d) das Signal (4a..4d) in einer vorgebbaren Stellung (P1..P6) des Rades (2a..2d) aussendet.

3. Verfahren nach Anspruch 2,
**dadurch gekennzeichnet,**
**dass** als vorgebbare Stellung (P1..P6) des Rades (2a..2d) eine oder mehrere aus der Gruppe: Winkelstellung des Rades (2a..2d) bezogen auf den Raum, Eintritt eines Punktes am Radumfang in die Radaufstandfläche (A), Austritt eines Punktes am Radumfang aus der Radaufstandfläche (A), Erreichen eines Punktes am Radumfang der Mitte der Radaufstandfläche (A) vorgesehen ist.

4. Verfahren nach einem der Ansprüche 1 bis 3,
**dadurch gekennzeichnet,**
**dass** der Beobachtungszeitraum derart gewählt wird, dass die Umdrehungen zumindest zweier Räder (2a..2d) eine vorgebbare Differenz aufweisen.

5. Verfahren nach einem der Ansprüche 1 bis 3,
**dadurch gekennzeichnet,**
**dass** zur Bestimmung des Beobachtungszeitraums das Eintreten einer bestimmten Betriebssituation des Fahrzeuges (1) abgewartet wird.

6. Detektor (3) zur Lokalisierung zumindest eines Rades (2a..2d) an einem Fahrzeug (1), umfassend:
a) Mittel zum Empfangen eines Signals (S4a..S4d) eines an dem Rad (2a..2d) montierten, ersten Sensors (4a..4d), welches Signal (S4a..S4d) eine Stellung (P1..P6) des Rades (2a..2d) angibt; und
b) Mittel zum Empfangen eines Messwertes (S5a..S5d) eines zweiten Sensors (5a..5d), der die Winkellage eines Rades (2a..2d) misst, und einer bestimmten Stelle des Fahrzeuges (1) zugeordnet ist;
**gekennzeichnet durch**
c) Mittel zum Bestimmen der Phasenlage (W1a..W3a W1b..W3b) des ersten Signals (S4a..S4d) in Relation zum
Messwert (S5a..S5d); und
d) Mittel zum Zuordnen des ersten Sensors (4a..4d) zu dem zweiten Sensor (5a..5d), wenn die Phasenlage (W1a..W3a, W1b..W3b) in einem bestimmten Beobachtungszeitraum innerhalb eines vorgegebenen Toleranzbereichs (WTa, WTb) bleibt.

7. Detektor (3) nach Anspruch 6,
**dadurch gekennzeichnet,**
**dass** der Beobachtungszeitraum derart gewählt wird, dass die Umdrehungen zumindest zweier Räder (2a..2d) eine vorgebbare Differenz aufweisen.

8. Detektor (3) nach einem der Ansprüche 6 bis 7,
**dadurch gekennzeichnet,**
**dass** zur Bestimmung des Beobachtungszeitraums das Eintreten einer bestimmten Betriebssituation des Fahrzeuges (1) abgewartet wird.

9. Detektor (3) nach einem der Ansprüche 6 bis 8,
**dadurch gekennzeichnet,**
**dass** die Mittel zum Bestimmen in welcher Winkellage das Signal (S4a..S4d) des ersten Sensors (4a..4d) empfangen wird, sowie die Mittel zum Zuordnen des ersten Sensors (4a..4d) zu dem zweiten Sensor (5a..5d) in einem Halbleiterbaustein angeordnet sind und die Empfangsmittel zumindest einen Eingang und/oder eine Funkempfangsmodul desselben darstellen.

10. System zur Lokalisierung zumindest eines Rades (2a..2d) an einem Fahrzeug (1), umfassend einen Detektor (3) nach einem der Ansprüche 6 bis 9, erste Sensoren (4a..4d), wobei jeder Sensor (4a..4d) zur Montage an einem Rad (2a..2d) oder einem auf dem Rad (2a) montierten Reifen (11), zur Aussendung eines Signals (S4a..S4d), welches eine Stellung (P1..P6) des Rades (2a..2d) angibt, und zur Messung eines weiteren Parameters des Rades (2a..2d) oder des Reifens (11) vorgesehen ist, und wobei die Sensoren (4a..4d)zur Kommunikation mit dem Detektor (3) vorgesehen sind, sowie zweite Sensoren (5a..5d), welche zur Kommunikation mit dem Detektor (3) vorgesehen sind.

11. System nach Anspruch 10,
**dadurch gekennzeichnet,**
**dass** ein erster Sensor (4a..4d) zur Aussendung des Signals (4a..4d) in einer vorgebbaren Stellung (P1..P6) des Rades (2a..2d) vorgesehen ist.

12. System nach Anspruch 11,
**dadurch gekennzeichnet,**
**dass** als vorgebbare Stellung (P1..P6) des Rades (2a..2d) eine oder mehrere aus der Gruppe: Winkelstellung des Rades (2a..2d) bezogen auf den Raum, Eintritt eines Punktes am Radumfang in die Radaufstandfläche (A), Austritt eines Punktes am Radumfang aus der Radaufstandfläche (A), Erreichen eines Punktes am Radumfang der Mitte der Radaufstandfläche (A) vorgesehen ist.

13. System nach einem der Ansprüche 10 bis 12,
**dadurch gekennzeichnet,**
**dass** als weiterer Parameter einer oder mehrere aus der Gruppe: Reifentemperatur, Reifendruck oder Radlast vorgesehen ist.

## Claims

1. Method for locating at least one wheel (2a..2d) on a vehicle (1), comprising the following steps:
a) a signal (S4a..S4d) is received from a first sensor (S4a..S4d) mounted on the wheel (2a..2d), which signal (S4a..S4d) indicates a position (P1..P6) for the wheel (2a..2d); and
b) a measured value (S5a..S5d) is received, from a second sensor (5a..5d), which measures the angular position of a wheel (2a..2d) and is associated with a particular location on the vehicle (1);
**characterized by** the following steps:
c) the phase angle (W1a..W3a, W1b..W3b) of the first signal (S4a..S4d) is determined in relation to the measured value (S5a..S5d); and
d) the first sensor (4a..4d) is associated with the second sensor (5a..5d) if the phase angle (W1a..W3a, W1b..W3b) remains within a prescribed tolerance range (WTa, Wtb) in a particular observation period.

2. Method according to Claim 1,
**characterized**
**in that** the first sensor (S4a..S4d) transmits the signal (4a..4d) in a prescribable position (P1..P6) of the wheel (2a..2d).

3. Method according to Claim 2,
**characterized**
**in that** the prescribable position (P1..P6) provided for the wheel (2a..2d) is one or more from the following group: angular position of the wheel (2a..2d) relative to space, entry of a point on the wheel circumference into the wheel footprint (A), emergence of a point on the wheel circumference from the wheel footprint (A), arrival of a point on the wheel circumference at the center of the wheel footprint (A).

4. Method according to one of Claims 1 to 3,
**characterized**
**in that** the observation period is chosen such that the revolutions of at least two wheels (2a..2d) exhibit a prescribable difference.

5. Method according to one of Claims 1 to 3,
**characterized**
**in that** the observation period is determined by awaiting the occurrence of a particular operating situation for the vehicle (1).

6. Detector (3) for locating at least one wheel (2a..2d) on a vehicle (1), comprising:
a) means for receiving a signal (S4a..S4d) from a first sensor (4a..4d) which is mounted on the wheel (2a..2d), which signal (S4a..S4d) indicates a position (P1..P6) for the wheel (2a..2d); and
b) means for receiving a measured value (S5a..S5d) from a second sensor (5a..5d), which measures the angular position of a wheel (2a..2d) and is associated with a particular location on the vehicle (1),
**characterized by**
c) means for determining the phase angle (W1a..W3a, W1b..W3b) of the first signal (S4a..S4d) in relation to the measured value (S5a..S5d); and
d) means for associating the first sensor (4a..4d) with the second sensor (5a..5d) if the phase angle (W1a..W3a, W1b..W3b) remains within a prescribed tolerance range (WTa, WTb) in a particular observation period.

7. Detector (3) according to Claim 6,
**characterized**
**in that** the observation period is chosen such that the revolutions of at least two wheels (2a..2d) exhibit a prescribable difference.

8. Detector (3) according to one of Claims 6 to 7,
**characterized**
**in that** the observation period is determined by awaiting the occurrence of a particular operating situation for the vehicle (1).

9. Detector (3) according to one of Claims 6 to 8,
**characterized**
**in that** the means for determining the angular position in which the signal (S4a..S4d) from the first sensor (4a..4d) is received and the means for associating the first sensor (4a..4d) with the second sensor (5a..5d) are arranged in a semiconductor chip, and the reception means are at least one input and/or a radio reception module thereof.

10. System for locating at least one wheel (2a..2d) on a vehicle (1), comprising a detector (3) according to one of Claims 6 to 9, first sensors (4a..4d), each sensor (4a..4d) being provided for mounting on a wheel (2a..2d) or a tire (11) mounted on the wheel (2a), for transmitting a signal (S4a..S4d) which indicates a position (P1..P6) for the wheel (2a..2d), and for measuring a further parameter for the wheel (2a..2d) or for the tire (11), and the sensors (4a..4d) being provided for communication with the detector (3), and second sensors (5a..5d) which are provided for communication with the detector (3).

11. System according to Claim 10,
**characterized**
**in that** a first sensor (4a..4d) is provided for transmitting the signal (4a..4d) in a prescribable position (P1..P6) of the wheel (2a..2d).

12. System according to Claim 11,
**characterized**
**in that** the prescribable position (P1..P6) provided for the wheel (2a..2d) is one or more from the following group: angular position of the wheel (2a..2d) relative to space, entry of a point on the wheel circumference into the wheel footprint (A), emergence of a point on the wheel circumference from the wheel footprint (A), arrival of a point on the wheel circumference at the center of the wheel footprint (A).

13. System according to one of Claims 10 to 11,
**characterized**
**in that** the further parameter provided is one or more from the following group: tire temperature, tire pressure or wheel load.

## Revendications

1. Procédé pour la localisation d'au moins une roue (2a...2d) sur un véhicule (1) comprenant les étapes suivantes :
a) réception d'un signal (S4a...S4d) d'un premier capteur (S4a...S4d) monté contre la roue (2a...2d), lequel signal (S4a...S4d) indique un positionnement (P1...P6) de la roue (2a...2d) ; et
b) réception d'une valeur de mesure (S5a...S5d) d'un deuxième capteur (5a...5d) qui mesure la position angulaire d'une roue (2a...2d), et qui correspond à une position déterminée du véhicule (1) ;
**caractérisé par** les étapes de
c) détermination de la position de phase (W1a...W3a, W1b...W3b) du premier signal (S4a...S4d) en relation avec la valeur de mesure (S5a...S5d) ; et
d) attribution du premier capteur (4a...4d) au deuxième capteur (5a...5d) lorsque la position de phase (W1a...W3a, W1b...W3b) reste à l'intérieur d'un intervalle de tolérance prédéterminé (WTa, WTb) pendant une période d'observation déterminée.

2. Procédé selon la revendication 1, **caractérisé en ce que** le premier capteur (S4a...S4d) émet le signal (4a...4d) dans un positionnement prédéterminable (P1...P6) de la roue (2a...2d).

3. Procédé selon la revendication 2, **caractérisé en ce que** pour le positionnement prédéterminable (P1...P6) de la roue (2a...2d), un ou plusieurs des éléments du groupe suivant sont prévus : positionnement angulaire de la roue (2a...2d) dans l'espace, entrée d'un point de la périphérie de la roue dans la surface de contact au sol (A), sortie d'un point de la périphérie de la roue hors de la surface de contact au sol (A), arrivée d'un point de la périphérie de la roue au milieu de la surface de contact au sol (A).

4. Procédé selon l'une des revendications 1 à 3, **caractérisé en ce que** la période d'observation est choisie de telle sorte que les rotations d'au moins deux roues (2a...2d) présentent une différence prédéterminable.

5. Procédé selon l'une des revendications 1 à 3, **caractérisé en ce que**, pour déterminer la période d'observation, on attend la survenue d'une situation d'exploitation déterminée du véhicule (1).

6. Détecteur (3) pour la localisation d'au moins une roue (2a...2d) sur un véhicule (1), comprenant :
a) des moyens de réception d'un signal (S4a...S4d) d'un premier capteur (4a...4d) monté contre la roue (2a...2d), lequel signal (S4a...S4d) indique un positionnement (P1...P6) de la roue (2a...2d) ; et
b) des moyens de réception d'une valeur de mesure (S5a...S5d) d'un deuxième capteur (5a...5d) qui mesure la position angulaire d'une roue (2a...2d), et qui correspond à un positionnement déterminé du véhicule (1) ;
**caractérisé par**
c) des moyens de détermination de la position de phase (W1a...W3a, W1b...W3b) du premier signal (S4a...S4d) en relation avec la valeur de mesure (S5a...S5d) ; et
d) des moyens d'attribution du premier capteur (4a...4d) au deuxième capteur (5a...5d) lorsque la position de phase (W1a...W3a, W1b...W3b) reste à l'intérieur d'un intervalle de tolérance prédéterminé (WTa, WTb) pendant une période d'observation déterminée.

7. Détecteur (3) selon la revendication 6, **caractérisé en ce que** la période d'observation est choisie de telle sorte que les rotations d'au moins deux roues (2a...2d) présentent une différence prédéterminable.

8. Détecteur (3) selon l'une des revendications 6 à 7, **caractérisé en ce que**, pour déterminer la période d'observation, on attend la survenue d'une situation d'exploitation déterminée du véhicule (1).

9. Détecteur (3) selon l'une des revendications 6 à 8, **caractérisé en ce que** les moyens de détermination de la position angulaire dans laquelle le signal (S4a...S4d) du premier capteur (4a...4d) est reçu, ainsi que les moyens d'attribution du premier capteur (4a...4d) au deuxième capteur (5a...5d) sont agencés dans un composant semi-conducteur et les moyens de réception constituent au moins une entrée et/ou un module de réception radio de celle-ci.

10. Système de localisation d'au moins une roue (2a...2d) sur un véhicule (1), comprenant un détecteur (3) selon l'une des revendications 6 à 9, des premiers capteurs (4a...4d), dans lequel chaque capteur (4a...4d) est conçu pour être monté contre une roue (2a...2d) ou sur un pneu (11) monté sur la roue (2a), pour l'émission d'un signal (S4a...S4d) indiquant un positionnement (P1...P6) de la roue (2a...2d) et pour la mesure d'un autre paramètre de la roue (2a...2d) ou du pneu (11), et dans lequel les capteurs (4a...4d) sont conçus pour communiquer avec le détecteur (3), ainsi que des deuxièmes capteurs (5a...5d) conçus pour communiquer avec le détecteur (3).

11. Système selon la revendication 10, **caractérisé en ce qu'**un premier capteur (4a...4d) est conçu pour l'émission du signal (4a...4d) dans un positionnement prédéterminable (P1...P6) de la roue (2a...2d).

12. Procédé selon la revendication 2, **caractérisé en ce que** pour le positionnement prédéterminable (P1 ... P6) de la roue (2a...2d), un ou plusieurs des éléments du groupe suivant sont prévus : positionnement angulaire de la roue (2a...2d) dans l'espace, entrée d'un point de la périphérie de la roue dans la surface de contact au sol (A), arrivée d'un point de la périphérie de la roue au milieu de la surface de contact au sol (A).

13. Système selon l'une des revendications 10 à 12, **caractérisé en ce que** pour autre paramètre un ou plusieurs éléments du groupe suivant sont prévus : température du pneu, pression du pneu ou charge sur la roue.
